Europäisches Patentamt

European Patent Office

Office européen des brevets

(11) Veröffentlichungsnummer: **0 155 338**
**B1**

# EUROPÄISCHE PATENTSCHRIFT

(45) Veröffentlichungstag der Patentschrift:
05.11.86

(21) Anmeldenummer: 84103443.2

(22) Anmeldetag: 28.03.84

(51) Int. Cl.⁴: **B 60 D 1/00**

(54) Höhenverstellbare Anhängerkupplung.

(43) Veröffentlichungstag der Anmeldung:
25.09.85 Patentblatt 85/39

(45) Bekanntmachung des Hinweises auf die Patenterteilung:
05.11.86 Patentblatt 86/45

(84) Benannte Vertragsstaaten:
AT CH DE LI

(56) Entgegenhaltungen:
EP-A-0 016 317
EP-A-0 095 443
CH-A-352 912
DE-A-2 852 773
DE-A-3 122 116
DE-B-1 169 794
FR-A-1 439 226
US-A-1 566 831
US-A-3 865 406

(73) Patentinhaber: ROCKINGER Spezialfabrik für
Anhängerkupplungen GmbH & Co.,
Orleansstrasse 12 Postfach 80 14 44, D-8000
München 80 (DE)

(72) Erfinder: Baumgartner, Richard, Lichtenweg 15,
D-8254 Isen (DE)

(74) Vertreter: Blumbach Weser Bergen Kramer
Zwirner Hoffmann Patentanwälte,
Radeckestrasse 43, D-8000 München 60 (DE)

**Beschreibung**

Die Erfindung betrifft eine höhenverstellbare Anhängerkupplung nach dem Oberbegriff des Patentanspruchs.1.

Eine Anhängerkupplung dieser Art ist in der DE-PS 29 10 164 beschrieben. Bei dieser bekannten Anhängerkupplung sind zwei Riegel in Form von Bolzen miteinander fluchtend im Kupplungsmaulträger geführt und durch eine zwischen ihnen angeordnete Druckfeder gegeneinander in die jeweilige Verriegelungsstellung vorgespannt. Im Abstand neben den Bolzen ist die im wesentlichen kreisrunde Schwenkplatte am Kupplungsmaulträger um ihren Mittelpunkt schwenkbar gelagert. Beide Bolzen sind jeweils über einen sich zwischen der Schwenkplatte und dem zugehörigen Bolzen befindenden Zwischenhebel mit der Schwenkplatte verbunden. An dem einen Ende jedes Zwischenhebels ist ein Zapfen angebracht, der in eine Bohrung in der Schwenkplatte eingesteckt ist. Ein weiterer Zapfen durchsetzt das andere Ende des Zwischenhebels und den zugehörigen Bolzen, wodurch sich eine Kniehebelkonstruktion ergibt und in der Verriegelungsstellung von Schwenkplatte und Bolzen die Gelenkachsen der Verbindungen zwischen der Schwenkplatte und den Zwischenhebeln einerseits und der Verbindungen zwischen letzteren und den Bolzen andererseits auf einer Geraden liegen. Auf dieser Geraden liegt auch der Drehpunkt der Schwenkplatte. Die beiden Zapfen, die die Zwischenhebel mit den Bolzen verbinden sind je in zwei Führungsschlitzen im Kupplungsmaulträger geführt. Die Führungsschlitze sind als horizontale Langlöcher ausgebildet, die lediglich den Hub der Bolzen begrenzen und im Herausfallen der Bolzen bei einem ungewollten Lösen der Befestigung eines Zwischenhebels an der Schwenkplatte verhindern sollen.

An einem nach oben abstehenden Ansatz der Schwenkplatte ist ein Handgriff befestigt, mit Hilfe dessen die Schwenkplatte zwischen ihrer Verriegelungsstellung und ihrer Entriegelungsstellung ver schwenkt werden kann und der zugleich dazu dient, die gesamte Anordnung bei der Höhenverstellung zu halten. Der mit dem Handgriff verbundene Ansatz der Schwenkplatte wird von einem Stift durchsetzt, der in Verbindung mit einer am Kupplungsmaulträger schwenkbar befestigten Lasche einer Verriegelung der Schwenkplatte in ihrer Verriegelungsstellung dient. Erst wenn die Lasche aus der Bewegungsbahn des Stifts geschwenkt wurde, kann die Schwenkplatte mit Hilfe des Griffs in die Entriegelungsstellung gebracht werden. An jeder der Führungsschienen einerseits und am Kupplungsmaulträger andererseits greift eine Druckfeder an, die der Gewichtskraft von Kupplungsmaulträger mit Kupplungsmaul entgegenwirken und damit die Höhenverstellung erleichtern sollen.

Aufgabe der Erfindung ist es, eine höhenverstellbare Anhängerkupplung der angegebenen Art zu schaffen, die mit wenigen Elementen auskommt, betriebssicher ist und eine kurze Baulänge aufweist.

Diese Aufgabe wird erfindungsgemäß durch eine Anhängerkupplung mit den Merkmalen des Patentanspruchs 1 gelöst.

Je kürzer die Baulänge einer solchen Anhängerkupplung ist, desto kürzer sind auch die Hebelarme und damit die auf einzelne Teile einwirkenden Belastungen. Darüberhinaus ist eine kurze Baulänge von Vorteil, wenn, beispielsweise bei einem Ackerschlepper, Zusatzaggregate angebaut werden sollen und die Anhängerkupplung wegen ihrer kurzen Baulänge dabei nicht stört und deshalb nicht vorher abgenommen werden muß.

Bei der erfindungsgemäßen Lösung wird die kurze Baulänge dadurch erreicht, daß die Riegel und der zu ihrer Verstellung dienende Mechanismus nicht hintereinander, sondern im wesentlichen in einer Ebene angeordnet sind. Dabei erfolgt die Kupplung zwischen den Riegeln und der Schwenkplatte durch einen direkten Eingriff zwischen diesen beiden Teilen, ohne daß ein Zwischenhebel erforderlich wäre. Beispielsweise kann die Schwenkplatte in eine entsprechende Nut des jeweiligen Riegels eintauchen. Beide Teile werden dann mittels eines Zapfens aneinandergehalten, der fluchtende Bohrungen in den Nutwänden und einen Führungsschlitz in der Schwenkplatte durchsetzt. Die Führungsschlitze dienen dazu und sind entsprechend geformt, die Schwenkbewegung der Schwenkplatte in Schubbewegungeh der Riegel zwischen deren Verriegelungsstellung und deren Entriegelungsstellung umzusetzen. Durch die Form des Führungsschlitzes kann man dabei sehr einfach bestimmte Charakteristiken erzielen, beispielsweise eine progressive Bewegungsumsetzung in dem Sinne, daß der von den Riegeln aus der Verriegelungsstellung zurückgelegte Weg pro Schwenkwinkeleinheit mit zunehmendem Schwenkwinkel steigt. Dies entspricht einer die Handhabung erleichternden anfänglichen Kraftübersetzung beim Lösen der Verriegelung.

Der Eingriff zwischen der Schwenkplatte und den Riegeln kann, lediglich als ein weiteres Beispiel, auch dadurch erfolgen, daß die Riegel in eine Umfangsnut der Schwenkplatte eintauchen. In diesem Fall wären die Führungsschlitze vorzugsweise in beiden Nutwänden vorzusehen.

Es dient der Sicherheit, wenn die Riegel durch eine Feder in ihre Verriegelungsstellung vorgespannt werden. Dies kann gemäß einer vorteilhaften Weiterbildung der Erfindung durch eine die Schwenkplatte gegenüber dem Kupplungsmaulträger vorspannende Drehfeder erfolgen, die sich dann über die Schwenkplatte indirekt auf die Riegel auswirkt. Diese Drehfeder bewirkt zugleich den Vorteil, daß ständig die Riegel und ihr Verstellmechanismus gegeneinander verspannt sind.

Die Verschwenkung der Schwenkplatte kann in an sich bekannter Weise mittels eines Handgriffs erfolgen, der an einem Ansatz der Schwenkplatte befestigt ist. Besonders vorteilhaft ist es, diesen Handgriff seinerseits zwischen einer Ruhestellung und einer Betriebsstellung schwenkbar auszubilden und vorzusehen, daß er in seiner Ruhestellung durch eine formschlüssige Verbindung zwischen dem Kupplungsmaulträger bzw. einem diesemngegenüber starren Teil einerseits und der Schwenkplatte andererseits eine Verstellung der letzteren aus ihrer Verriegelungsstellung verhindert. Diese Art der Verriegelung der Schwenkplatte mittels des Handgriffs erhöht einerseits die Sicherheit, und erlaubt andererseits die komplette Einhandbedienung der höhenverstellbaren Kupplung. Dabei wird der Handgriff aus einer Ruhestellung, in der er möglichst wenig zur Bauhöhe der Anordnung beiträgt, in eine Betriebsstellung verschwenkt, in der er ein bequemes Halten von Kupplungsmaulträger und Kupplung sowie die Verschwenkung der Schwenkplatte ermöglicht. Durch das Hochkippen des Handgriffs in die Betriebsstellung, vorzugsweise gegen die Kraft einer Vorspannfeder, wird die Verriegelung der Schwenkolatte gelöst, so daß diese nunmehr in ihre Entriegelungsstellung verschwenkt werden kann. Für beide Funktionen ist ausschließlich eine Betätigung des Handgriffs erforderlich.

Gemäß einer vorteilhaften Weiterbildung der Erfindung ist die Schwenkplatte als Kurvenscheibe ausgebildet, deren Außenrand im Bereich der Führungsschlitze der Schwenkplatte, also in dem Bereich, der mit den Riegeln in Eingriff kommt, im wesentlichen parallel zu den Führungsschlitzen verläuft und Sicherheitsanschläge für die Riegel bildet. Hierdurch kann erreicht werden, daß insbesondere in der Verriegelungsstellung der Schwenkplatte zwischen ihrem Außenrand und einem entsprechenden Flächenteil der riegel, beispielsweise dem Grund einer in diesen vorgesehenen Nut, nur ein geringer Abstand besteht. Selbst wenn bei einer solchen Anordnung der einen Riegel mit der Schwenkplatte verbindende Zapfen bricht, würde der Riegel bei einer Bewegung aus seiner Verriegelungsstellung in Richtung auf die Entriegelungsstellung an den Außenrand der Schwenkplatte anstoßen und dadurch sicher in einer die Verriegelung noch einwandfrei gewährleistenden Stellung gehalten werden.

Die Führungsschlitze in der Schwenkplatte sind vorzugsweise so ausgebildet, daß der Teil der Führungsschlitze, an dem die Zapfen in der Verriegelungsstellung der Schwenkplatte anliegen, senkrecht zur Bewegungsrichtung der Riegel verläuft und daß diese Teile der Führungsschlitze auf einer gemeinsamen, durch den Drehpunkt der Schwenkplatte gehenden Linie liegen. Dadurch wird gewährleistet, daß eine auf die Riegel einwirkende und sie aus ihrer Verriegelungsstellung drängende Kraft nicht zu einem die Schwenkplatte belastenden Drehmoment umgesetzt wird.

Durch die beschriebenen Weiterbildungen der Erfindung lassen sich außer der kurzen Baulänge weitere wesentliche Vorteile, nämlich eine höhere Sicherheit der Verriegelung, eine besonders einfache Einhandbedienung und auch eine leichte Montage erzielen. Letztere wird dadurch noch gefördert, daß die Riegel und die Schwenkplatte auf der dem Kupplungsmaul abgewandten Seite in bzw. an dem Kupplungsmaulträger befestigt sind. Durch später anhand der Zeichnungen noch näher · erläuterte einfache Maßnahmen kann schließlich eine für die gute Funktion wichtige Schmierung der beweglichen Teile im Kupplungsmaulträger gewährleistet werden.

Die Erfindung wird nachfolgend anhand von Ausführungsbeispielen unter bezug auf die Zeichnungen näher erläutert. Es zeigen:
Fig. 1 eine Seitenansicht der höhenverstellbaren Anhängerkupplung,
Fig. 2 eine Draufsicht auf die Anordnung von Fig. 1,
Fig. 3 in etwas größerer Darstellung eine Draufsicht auf den Kupplungsmaulträger mit Kupplungsmaul,
Fig. 4 eine Seitenansicht der Anordnung von Fig. 3, teilweise im Schnitt,
Fig. 5 die Ansicht entsprechend dem Pfeil X in Fig. 3 mit in Verriegelungsstellung befindlicher Schwenkplatte,
Fig. 6 eine Darstellung ähnlich von Fig. 5, jedoch mit in Entriegelungsstellung befindlicher Schwenkplatte,
Fig. 7a bis 7d eine abgewandelte Ausführungsform der Erfindung.

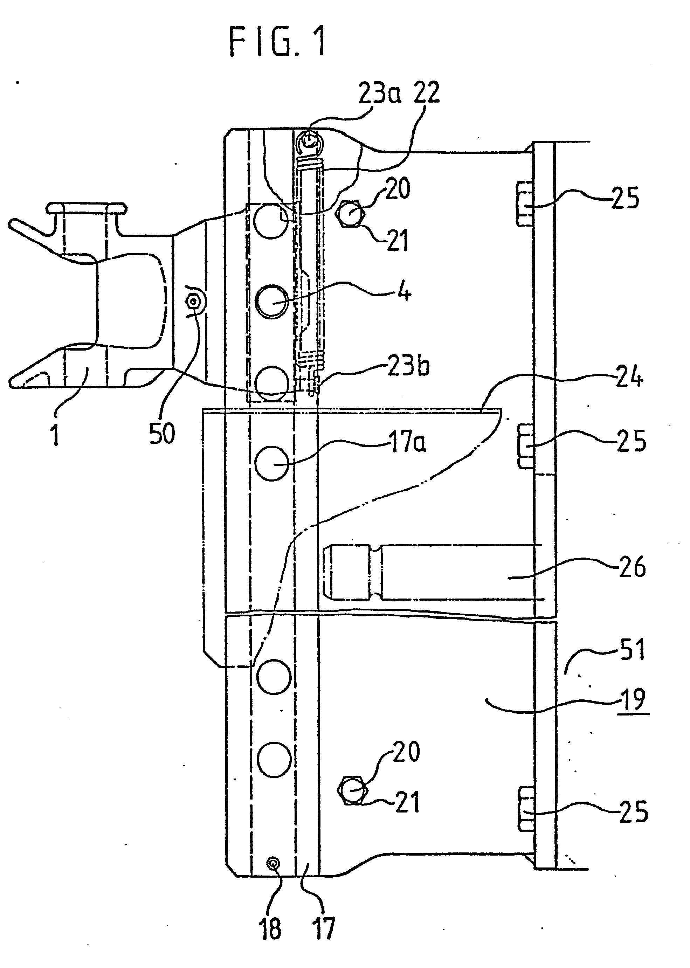

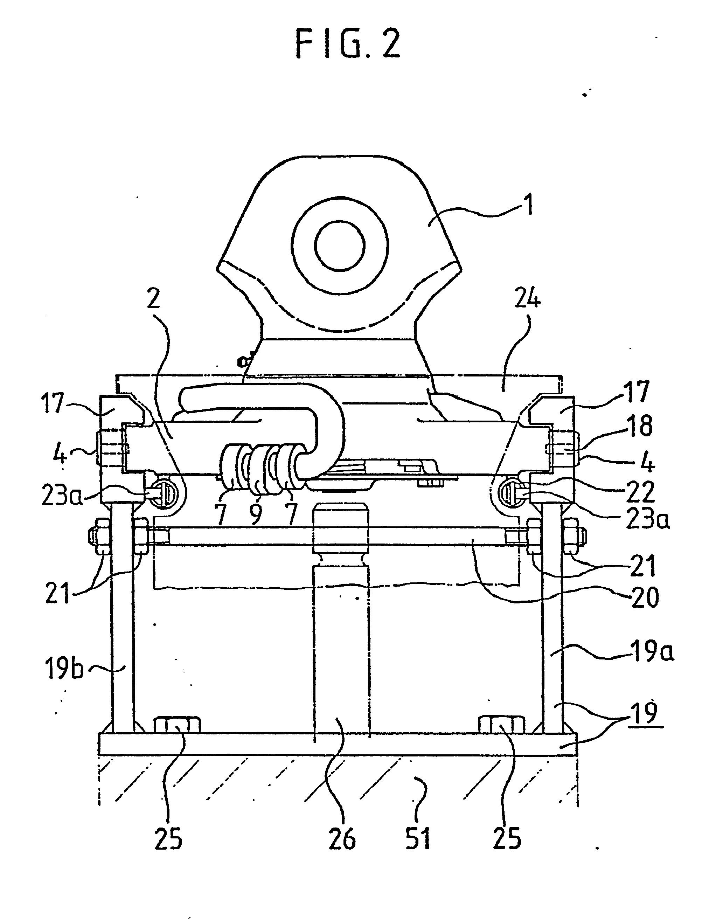

Gemäß den Fig. 1 und 2 ist ein Kupplungsmaul 1 an einem Kupplungsmaulträger 2 auf nicht näher dargestellte Weise drehbar befestigt. Der Kupplungsmaulträger 2 wird seinerseits von einem Anhängerbock 19 getragen, der mittels Schrauben 25 am Fahrzeug, und zwar in der Regel am Getriebeblock 51 befestigt ist. Der Anhängerbock 19 um faßt zwei Seitenplatten 19a und 19b, von denen jede an ihrem fahrzeugabgewandten Ende eine Führungsschiene 17 trägt, in deren Führungsnuten der Kupplungsmaulträger 2 vertikal beweglich geführt ist, wie dies am besten aus Fig. 2 ersichtlich ist. Mit Hilfe von Gewindestangen 20 und Muttern 21 wird eine Seitenstabilisierung des Anhängerbocks und zugleich die Einstellung des Abstands zwischen den beiden Führungsschienen 17 bewirkt.

Damit beim Verstellen der Höhe des Kupplungsmaulträgers 2 in den Führungsschienen 17 nicht dessen gesamtes Gewicht von der Bedienungsperson getragen werden muß, ist auf Seiten jeder der beiden Führungsschienen 17 eine Zugfeder 22 zwischen dem oberen Ende der Führungsschiene und dem Kupplungsmaulträger angeordnet. Ein Stift 23a hält das obere Ende der Zugfeder 22 an der Führungsschiene 17, während ein Stift 23b das untere Ende der Zugfeder am Kupplungsmaulträger 2 hält.

Die Führungsschienen sind mit Ausnehmungen 17a versehen, die in Fig. 1 als Bohrungen im Grund der Führungsnuten der Führungsschienen 17 dargestellt sind. Der Kupplungsmaulträger 2 besitzt Riegel 4, die in diese Ausnehmungen 17a eingreifen und dadurch den Kupplungsmaulträger in einer jeweils gewählten Höhenlage verriegeln. Soll eine andere Höhenlage der Kupplung eingestellt werden, dann müssen die Riegel 4 aus den Ausnehmungen 17a zurückgezogen, der Kupplungsmaulträger in die neue Höhenlage gebracht und die Riegel 4 erneut in die entsprechenden Ausnehmungen 17a geschoben werden.

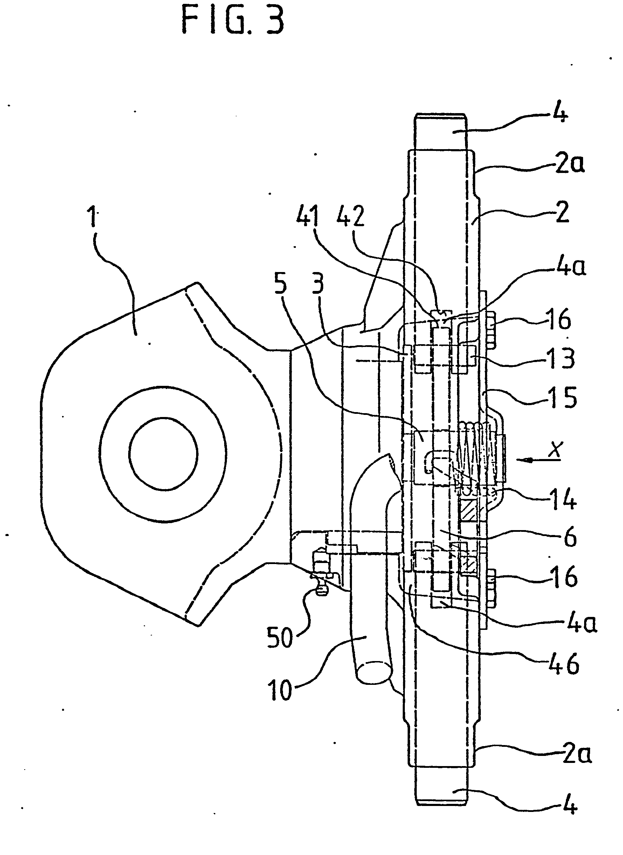

Die Anordnung der Riegel 4 sowie der zu ihrer Verstellung dienenden Teile wird nachfolgend insbesondere anhand der Fig. 3 bis 6 erläutert.

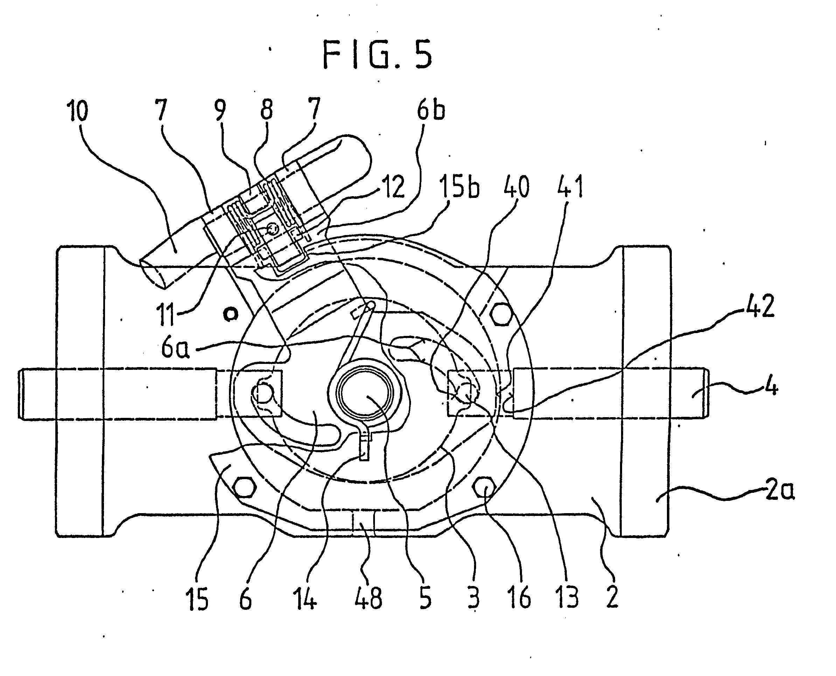

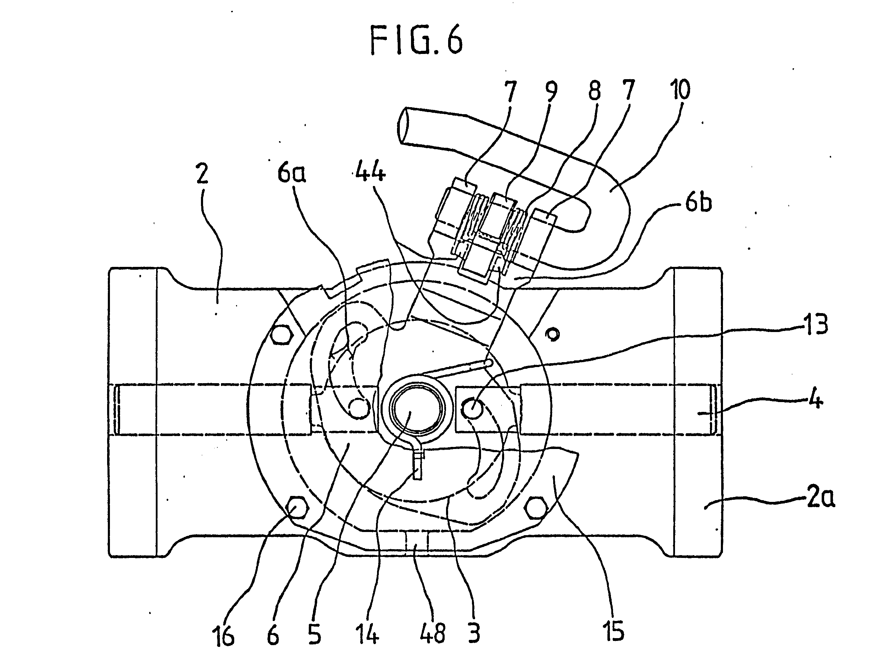

In der Draufsicht von Fig. 3, in der ein Teil des noch erläuterten Handgriffs 10 der klareren Darstellung wegenweggelassen ist, erkennt man die abgesetzten Enden 2a des Kupplungsmaulträgers 2, die bei montierter Kupplung in die Führungsnuten der Führungsschienen eintauchen. Aus ihnen ragen die hier in der Verriegelungsstellung gezeigten Riegel 4 vor, die mit den beschriebenen Ausnehmungen 17a der Führungsschienen zusammenwirken. Zwei Riegel 4 sind vorzugsweise auf entgegengesetzten Seiten in miteinander fluchtenden Bohrungen des Kupplungsmaulträgers 2 geführt. An ihrem inneren Ende besitzen die Riegel 4 eine Nut 4a, in die eine Schwenkplatte 6 eintaucht, welche auf einem Lagerbolzen 5 drehbar im Kupplungsmaulträger 2 gelagert ist. Der Lagerbolzen 5 wird einerseits von einer Lagerscheibe 3 und andererseits von einem Abschlußdeckel 15 getragen. Die Lagerscheibe 3 ist in eine hierfür vorgesehene Ausnehmung im Inneren des Kupplungsmaulträgers 2 gelegt, während der Abschlußdeckel 15 mit Hilfe von Schrauben 16 am Kupplungsmaulträger 2 befestigt ist. Mit Hilfe von Zapfen 13 werden die beiden Riegel 4 und die Schwenkplatte 6 miteinander im Eingriff gehalten. Die Zapfen 13 durchsetzen entsprechende Bohrungen in den Riegeln 4 und je einen Führungsschlitz 6a in der Schwenkplatte 6 (vgl. auch Fig. 5 und 6). Bei einer Schwenkbewegung der Schwenkplatte 6 um den Lagerbolzen 5 wandern die Zapfen 13 im zugehörigen Führungsschlitz 6a, wodurch die Schwenkbewegung der Schwenkplatte 6 in eine Verschiebebewegung der Riegel 4 umgesetzt wird.

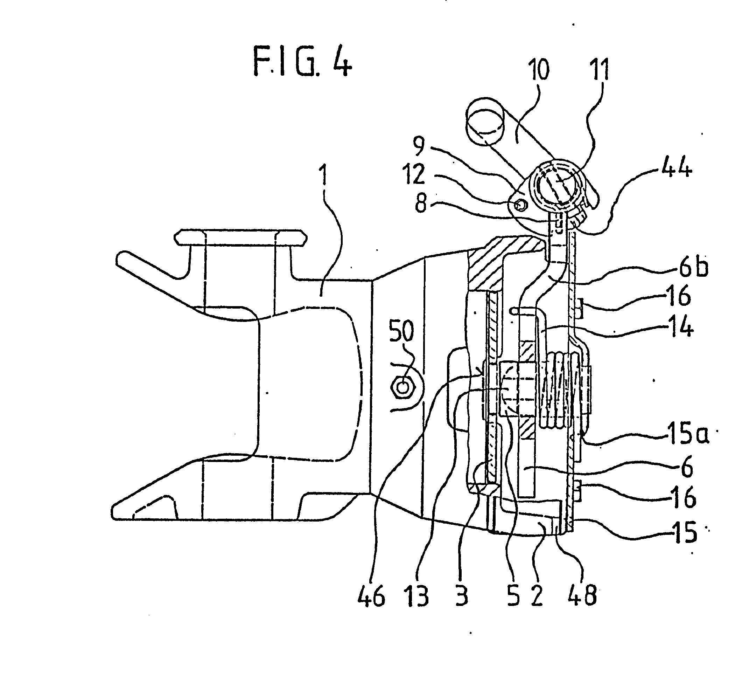

Die Schwenkplatte 6 ist mit einem Ansatz 6b versehen (Fig. 4), der oben aus dem Kupplungsmaulträger 2 herausragt und den schon erwähnten Handgriff 10 trägt. mit Hilfe des Handgriffs 10 ist die Schwenkplatte 6 zwischen zwei Endstellungen, nämlich einer Verriegelungsstellung und einer Entriegelungsstellung, um den Lagerbolzen 5 verschwenkbar. Die Führungsschlitze 6a sind so ausgebildet, daß die Riegel 4 in der Verriegelungsstellung der Schwenkplatte ihrerseits in einer Verriegelungsstellung sind, das heißt relativ weit aus dem Kupplungsmaulträger 2 herausragen. Dagegen sind die Riegel 4 in der Entriegelungsstellung der Schwenkplatte 6 soweit in den Kupplungsmaulträger 2 zurückgezogen, daß letzterer in den Führungsschienen 17 des Ahhängerbocks 19 höhenverstellt werden kann.

Eine einerseits an der Schwenkplatte 6 und andererseits an dem Abschlußdeckel 15 angreifende Drehfeder 14 spannt die Schwenkplatte 6 in ihre Verriegelungsstellung vor. Zu diesem Zweck ist die auf den Lagerbolzen 5 gesteckte Drehfeder 14 mit ihrem einen abgebogenen Ende um den den Handgriff 10 tragenden Ansatz der Schwenkplatte 6 gelegt, während ihr anderes Ende durch eine Bohrung 15a in einer Ausbauchung des Abschlußdeckels 15 gesteckt ist. Hierdurch wird eine besonders einfache Montage erreicht, bei der die Vorspannung erst im letzten Montageschritt, nämlich bei der Befestigung des Abschlußdeckels 15 aufgebracht wird.

Der Handgriff 10 ist bügelartig, im wesentlichen in Form eines U ausgebildet und mit seinem einen Schenkel drehbar am Ende des Ansatzes 6b der Schwenkplatte 6 gelagert. Dieses Ende des Ansatzes 6b ist gabelartig mit zwei Lagerflanschen 7 ausgebildet, durch deren fluchtende Bohrungen der Handgriff 10 gesteckt ist. Zwischen den beiden Lagerflanschen, die auch in Fig. 2 gut erkennbar sind, ist ein Sperrnocken 9 auf dem Handgriff 10 angeordnet und mittels einer Spannhülse 11 drehfest mit ihm verbunden. Die Form des Sperrnockens 9 ist insbesondere aus der Seitenansicht von Fig. 4 gut erkennbar. Eine Drehfeder 8 Spannt den Handgriff 10 gegenüber dem Ansatz 6b der Schwenkplatte 6 in eine Ruhestellung vor (im Gegenuhrzeigersinn in Fig. 4). In der Ruhestellung stützt sich der Sperrnocken 9 über eine ihn im wesentlichen parallel zur Drehachse des Handgriffs 10 durchsetzende Spannhülse 12 am Ansatz 6b ab. In dieser Ruhestellung liegt der Handgriff 10 im wesentlichen in einer horizontalen Ebene, jedenfalls so, daß er möglichst wenig zur Bauhöhe der Anordnung beiträgt. In der Ruhestellung des Handgriffs 10 taucht ein Teil des Sperrnockens 9 in eine Ausnehmung 15b am Rand des Abschlußdeckels 15 ein, wodurch eine Verschwenkung der Schwenkplatte 6 verhindert wird. In der Betriebsstellung des Handgriffs 10 stützt sich der Sperrnocken 9 über sich von ihm beidseitig erstreckende Noppen 44 (siehe Fig. 6) am Ansatz 6b ab.

Sollen zur Höhenverstellung der Kupplung die Riegel 4 aus ihrer Verriegelungsstellung in die Entriegelungsstellung überführt werden, dann muß zunächst der Handgriff 10 aus seiner in Fig. 5 gezeigten Ruhestellung in die in Fig. 6 gezeigte Betriebsstellung hochgeklappt werden, in welcher der Sperrnocken 9 außer Eingriff mit dem Abschlußdeckel 15 ist Mittels des Handgriffs kann dann die Schwenkplatte 6 aus ihrer in Fig. 5 gezeigten Verriegelungsstellung in die in Fig. 6 gezeigte Entriegelungsstellung gegen die Kraft der Drehfeder 14 verschwenkt werden. Aufgrund der beschriebenen Führung der mit den Riegeln 4 verbundenen Zapfen 13 in den Führungsschlitzen 6a werden bei dieser Verschwenkung der Schwenkplatte 6 die Riegel 4 in ihre Entriegelungsstellung im Kupplungsmaulträger 2 zurückgezogen. Die Kupplung hängt jetzt in der Hand der Bedienungsperson, wobei das Gewicht durch die eingangs erwähnten Zugfedern 22 weitgehend kompensiert wird. Die Kupplung kann nun in eine neue Höhenlage angehoben oder abgesenkt werden. Bei Erreichen der neuen Höhenlage wird entgegengesetzt vorgegangen, das heißt zunächst wird mittels des Handgriffs 10 die Schwenkplatte 6 wieder in die Verriegelungsstellung zurückgeschwenkt und dann der Handgriff 10 selbst in seine Ruhestellung umgeklappt. Sowohl das Umklappen des Handgriffs zum Zwecke der Verriegelung oder Entriegelung der Schwenkplatte 6, als auch das Verschwenken der Schwenkplatte 6 und das Anheben bzw. Absenken der gesamten Kupplung erfolgt durch entsprechende Betätigung jeweils ein und desselben Betätigungselementes, nämlich des Handgriffs 10, so daß mit der Erfindung eine echte Einhandbedienung geschaffen wird. Durch die Drehfeder 8 wird der Handgriff 10 in seine Ruhestellung vorgespannt, wodurch zugleich die einzelnen Teile gegeneinander verspannt werden.

Es ist besonders vorteilhaft, wenn die Schwenkplatte 6 gemäß Darstellung in den Zeichnungen als Kurvenscheibe ausgebildet wird, deren Außenrand einen solchen Verlauf hat, daß in der Verriegelungsstellung der Schwenkplatte 6 zwischen dem Außenrand 41 und einer Anschlagsfläche 42 der Riegel 4 nur ein verhältnismäßig geringer Abstand liegt. Vorzugsweise verläuft der Außenrand im Bereich der Führungsschlitze 6a etwa parallel zu diesen. Wenn die Riegel gemäß Darstellung in Fig. 3 mit einer Nut 4a versehen sind, dann bildet der Nutgrund die Anschlagsfläche 42. Sollte bei einer solchen Ausgestaltung ein Zapfen 13 brechen und dadurch den Führungseingriff zwischen Riegel 4 und Schwenkplatte 6 lösen, so wäre doch immer noch gewährleistet, daß der zugehörige Riegel seine Verriegelungsstellung nicht ungewollt verlassen kann, solange sich die Schwenkplatte in ihrer Verriegelungsstellung beifindet Zwar könnte. sich der Riegel 4, beispielsweise aufgrund der auf ihn einwirkenden Vibration etwas in den Kupplungsmaulträger 2 zurückziehen, jedoch würde diese Bewegung gestoppt, sobald die Anschlagfläche 42 gegen den Außenrand 41 der Schwenkplatte 6 stößt. Der Abstand zwischen diesen beiden Flächen ist bei ordnungsgemäßem Betrieb so gering, daß auch bei Verringerung dieses Abstands auf den Wert Null noch ein einwandfreier Eingriff des Riegels 4 mit der zugehörigen Ausnehmung 17a in der Führungsschiene 17 gewährleistet ist.

Das jeweilige Ende 40 der Führungsschlitze 6a verläuft, zumindest auf der radial innen liegenden Seite, senkrecht zur Bewegungsrichtung der Riegel 4. Außerdem liegen diese Enden 40 bzw. die Mittellinien der Zapfen 13 zusammen mit dem Drehpunkt der Schwenkplatte 6 auf einer geraden Linie, so daß ein nach innen gerichteter Druck auf die in Verriegelungsstellung befindlichen Riegel 4 kein Drehmoment auf die Schwenkplatte 6 zur Folge hat.

Wie insbesondere Fig. 3 zu entnehmen, wird mit der Erfindung eine außerordentlich kompakte Anordnung sehr geringer Baulänge geschaffen, die mit wenig Einzelteilen auskommt und besonders leicht zusammenzubauen ist. Die Schwenkplatte 6 mit dem Handgriff 10 kann als Baueinheit vormontiert werden. Beim Zusammenbau wird dann zuerst die Lagerscheibe 3 in den Kupplungsmaulträger 2 gelegt. Dann wird die vormontierte Schwenkplatte 6 mit dem Lagerbolzen 5 eingesetzt. Vorher oder nachher werden die Riegel 4 eingeschoben. Dann werden die Zapfen 13 eingesteckt und die Drehfeder 14 an der Schwenkplatte 6 verankert. Schließlich wird das andere Ende der Drehfeder 14 durch die erwähnte Bohrung 15a im Abschlußdeckel 15 gesteckt und der Abschlußdeckel unter Spannung der Feder in seine Montagestellung gedreht, um dann mittels der Schrauben 16 befestigt zu werden.

Es sei angemerkt, daß der Eingriff zwischen Riegel 4 und Schwenkplatte 6 anders als in Fig. 3 dargestellt sein kann. So kann beispielsweise anstelle einer etwa in der Mittelebene vorgesehenen Nut 4a an einem Rand der Riegel 4 eine stufenartige Ausnehmung vorgesehen sein, in die die Schwenkplatte 6 in ähnlicher Weise eingreifen würde, Auch könnte statt der Riegel 4 die Schwenkplatte 6 mit einer Nut versehen sein und ihrerseits beispielsweise einen abgeflachten Teil der Riegel umgreifen.

Wie schon eingangs erwähnt ist das Kupplungsmaul 1 drehbar im Kupplungsmaulträger 2 gelagert. Zur Schmierung dieser Lagerung dient ein Schmiernippel 50, über den Schmierfett zwischen die beweglichen Teile dieser Lagerung gedrückt werden kann. Der Kupplungsmaulträger 2 ist nun vorzugsweise so ausgebildet, daß das am schmiernippelabgewandten Ende der Kupplungsmaullagerung austretende Schmierfett in eine Ausnehmung 46 eintritt und über diese unter anderem zur Eingriffsstelle zwischen den Riegeln 4 und der Schwenkplatte 6 und insbesondere in den Bereich von deren Führungsschlitzen 6a gelangt. Auf diese Weise lä-t sich beim Abschmieren der Kupplung zugleich der beschriebene Verriegelungsmechanismus abschmieren.

Am unteren Ende der Kupplungsmaulhalterung

2 ist eine Öffnung 48 ausgebildet (siehe Fig. 4, 5 und 6), durch die eingedrungenes Wasser ablaufen kann.

Der Kupplungsmaulträger 2 ist in den Führungsschienen 17 an der Zapfwelle 26 (Fig. 1) vorbei nach unten verschiebbar und auch unterhalb der Zapfwelle verriegelbar, so daß die Kupplung bei Benutzung der Zapfwelle 26 entsprechend tief verfahren werden kann und den Zapfwellenbetrieb nicht stört. Auch in ihrer tiefsten Stellung kann die Kupplung zum Anhängen verwendet werden. Am unteren Ende der Führungsschienen 17 verhindert ein Anschlag 18 das Herausgleiten des Kupplungsmaulträgers 2 aus den Führungsschienen. Ein in den Zeichnungen nur angedeuteter Zapfwellenschutz 24 ist so angebracht, daß er leicht abgenommen werden kann, wenn die Kupplung unter die Zapfwelle verstellt werden soll.

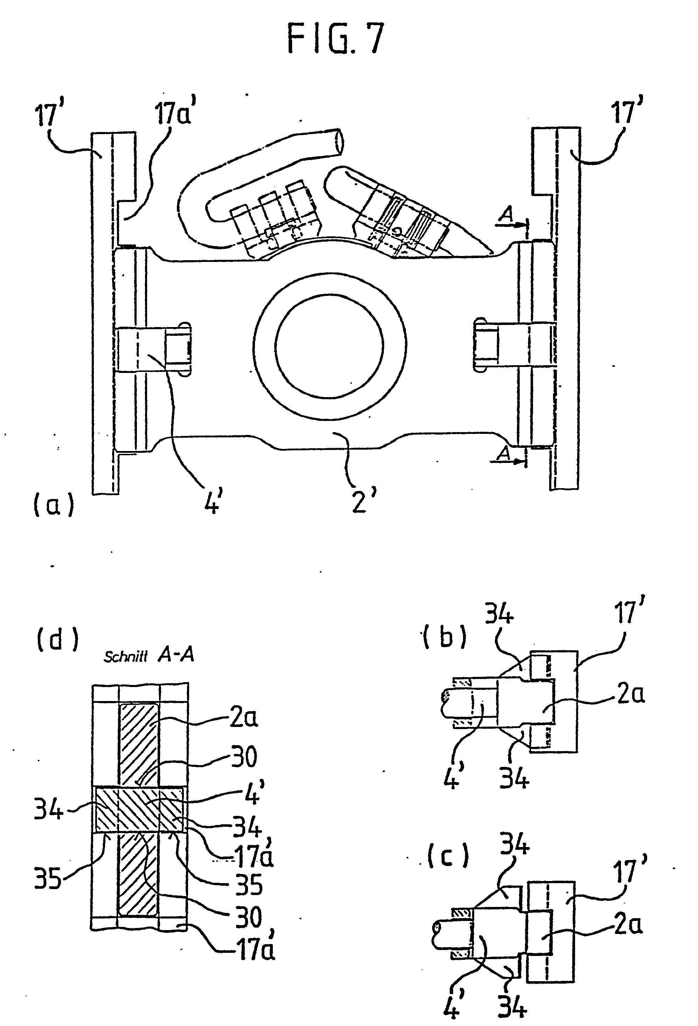

Die Fig. 7a bis 7d zeigen schematisch eine abgewandelte Ausführungsform der Erfindung, wobei sich die Abwandlung auf die Ausbildung der Riegel und der mit ihnen zusammenwirkenden Ausnehmungen in den Führungsschienen bezieht:

Fig. 7a zeigt eine Ansicht von vorne, wobei das Kupplungsmaul nicht mit dargestellt ist. Fig. 7b zeigt eine Teildraufsicht auf die Anordnung von Fig. 7a zur Erläuterung der Verriegelungsstellung, während Fig. 7c eine entsprechende Ansicht in Entriegelungsstellung ist. Fig. 7d ist eine Schnittansicht längs der Schnittlinie A-A in Fig. 7a.

Bei dem anhand der Fig. 1 bis 6 beschriebenen Ausführungsbeispiel sind die Ausnehmungen 17a in dem Boden der Führungsnut der Führungsschienen 17 ausgebildet, das heißt sie erstrecken sich in der Bewegungsrichtung der Riegel 4. Um mit diesen Ausnehmungen in Eingriff zu kommen, müssen die Riegel 4 in ihrer Verriegelungsstellung über die seitlichen Enden des Kupplungsmaulträgers 2 hinausragen.

Bei der in den Fig. 7a bis 7d dargestellten Abwandlung sind die Ausnehmungen 17a' in den Seitenwänden der Führungsschienen 17' ausgebildet, zwischen denen die abgesetzten Enden 2a des Kupplungsmaulträgers 2' geführt sind. Damit diese Führung nicht beeinträchtigt wird, ist die Höhe dieser Ausnehmungen 17a' klein im Verhältnis zur Höhe der abgesetzten Enden 2a des Kupplungsmaulträgers 2'. Die Riegel 4' besitzen in diesem Fall seitliche Ansätze 34, die durch entsprechende Öffnungen im Kupplungsmaulträger 2' beidseitig nach außen ragen, wie dies aus den Fig. 7b bis 7d deutlich erkennbar ist. In der Verriegelungsstellung stützen sich die Riegel 4' in bezug auf die abgesetzten Enden 2a des Kupplungsmaulträgers 2' beidseitig symmetrisch und großflächig auf Böden 35 der Ausnehmungen 17a ab und liegen andererseits an Führungsflächen 30 des Kupplungsmaulträgers 2' an. Die auftretenden Vertikalbelastungen werden somit über den Kupplungsmaulträger 2' und die Riegel 4' jeweils auf zwei Flächen der Führungsschienen 17' übertragen. In der Entriegelungsstellung sind die seitlichen Ansätze 34 der Riegel 4' aus den Ausnehmungen 17a' herausgezogen, so daß sie im Abstand vor den Führungsschienen 17' stehen, wie dies aus Fig. 7c erkennbar ist.

Bezüglich nicht im einzelnen beschriebener konstruktiver Details der dargestellten Ausführungsformen wird ausdrücklich auf die Zeichnungen Bezug genommen.

**Patentansprüche**

1. Höhenverstellbare Anhängerkupplung, insbesondere für landwirtschaftliche Fahrzeuge, umfassend
ein Kupplungsmaul (1),
einen Kupplungsmaulträger (2), an dem das Kupplungsmaul (1) befestigt ist und der in vertikalen, am Fahrzeug befestigten Führungsschienen (17) geführt ist,
im Kupplungsmaulträger (2) geführte Riegel (4), die in einer Verriegelungsstellung in Ausnehmungen der Führungsschienen (17) eingreifen und den Kupplungsmaulträger (2) in den Führungsschienen (17) gegen eine Höhenverstellung verriegeln und die aus der Verriegelungsstellung in eine Entriegelungsstellung zurückziehbar sind, in der der Kupplungsmaulträger (2) längs den Führungsschienen (17) verschiebbar ist, und
eine im Kupplungsmaulträger (2) gelagerte Schwenkplatte (6), die zur Verstellung der Riegel (4) zwischen deren Verriegelungsstellung und deren Entriegelungsstellung ihrerseits zwischen einer Verriegelungsstellung und einer Entriegelungsstellung verschwenkbar ist und über parallel zu ihrer Schwenkachse sie durchsetzende Zapfen (13) mit den Riegeln (4) gekuppelt ist, dadurch gekennzeichnet
daß die Schwenkplatte (6) etwa in der Ebene der Riegel (4) angeordnet ist und mit einem jeweiligen Abschnitt mit dem zugewandten Ende der Riegel (4) im Eingriff steht und
daß die Zapfen (13) in Führungsschlitze (6a) der Schwenkplatte (6) eingreifen und unmittelbar mit den Riegeln (4) verbunden sind.

2. Anhängerkupplung nach Anspruch 1, dadurch gekennzeichnet, daß die Schwenkplatte (6) mit einem jeweiligen Abschnitt in eine Ausnehmung (4a) der Riegel (4) eingreift.

3. Anhängerkupplung nach einem der vorhergehenden Ansprüche, dadurch gekennzeichnet, daß die Schwenkplatte (6) von einer einerseits an der Schwenkplatte (6) und andererseits am Kupplungsmaulträger (2) angreifenden Drehfeder (14) in die Verriegelungsstellung vorgespannt wird.

4. Anhängerkupplung nach einem der vorhergehenden Ansprüche, bei der ein Handgriff (10) an einem aus dem Kupplungsmaulträger (2) herausragenden Ansatz (6b) der Schwenkplatte (6) befestigt ist und zur Höhenverstellung des Kupplungsmaulträgers (2) sowie zur Verschwenkung der Schwenkplatte (6) dient, dadurch gekennzeichnet, daß der Handgriff (10) in der Verriegelungsstellung der Schwenkplatte (6) gegenüber dieser zwischen einer Ruhestellung und einer Betriebsstellung verschwenkbar ist und in seiner Ruhestellung durch eine formschlüssige Verbindung zwischen dem Kupplungsmaulträger (2) und der Schwenkplatte (6) eine Verstellung der letzteren aus ihrer Verriegelungsstellung verhindert.

5. Anhängerkupplung nach Anspruch 4, dadurch gekennzeichnet, daß der bügelartige Handgriff (10) in seiner Ruhestellung in einer im wesentlichen horizontalen Ebene und in seiner Betriebsstellung in einer in wesentlichen vertikalen Ebene liegt.

6. Anhängerkupplung nach einem der vorhergehenden Ansprüche, dadurch gekennzeichnet, daß die Schwenkplatte (6) als Kurvenscheibe ausgebildet ist, deren Außenrand im Bereich ihrer Führungsschlisze (6a) im wesentlichen parallel zu diesen verläuft und Sicherheitsanschläge für die Riegel (4) bildet.

7. Anhängerkupplung nach einem der vorhergehenden Ansprüche, dadurch gekennzeichnet, daß der Teil (40) der Führungsschlitze (6a) der Schwenkplatte (6), in dem sich die Zapfen (13) in der Verriegelungsstellung von Schwenkplatte (6) und Riegeln (4) befinden, senkrecht zur Bewegungsrichtung der Riegel (4) verläuft und daß diese Teile (40) der Führungsschlitze (6a) auf einer gemeinsamen, durch den Drehpunkt der Schwenkplatte (6) gehenden Geraden liegen.

8. Anhängerkupplung nach einem der vorhergehenden Ansprüche, dadurch gekennzeichnet, daß die Riegel (4) und die Schwenkplatte (6) auf der dem Kupplungsmaul (1) abgewandten Seite in bzw. an dem Kupplungsmaulträger (2) befestigt sind.

9. Anhängerkupplung nach einem der vorhergehenden Ansprüche, dadurch gekennzeichnet, daß der Kupplungsmaulträger (2) eine Ausnehmung (46) aufweist, üer die durch einen Schmiernippel (90) in die Kupplungsmaullagerung eingepreßtes Schmierfett an die Eingriffsstellen zwischen Riegeln (4) und Schwenkplatte (6) und insbesondere in deren Führungsschlitze (6a) gelangt.

10. Anhängsrkupplung nach einem der vorhergehenden Ansprüche, dadurch gekennzeichnet, daß die Ausnehmungen (17a) der Führungsschienen (17') jeweils paarweise fluchtend in den Seitenwänden der Führungsschienen (17') ausgebildet sind und mit entsprechenden seitlichen Ansätzen (34) der Riegel (4') zusammenwirken.

## Claims

I. A trailer coupling which is adjustable in height, in particular for agricultural vehicles, comprising:
a coupling jaw (1),
a coupling jaw carrier (2) to which the coupling jaw (1) is fixed and which is guided in vertical guide rails (17) Which are secured to the vehicle, locking bolts (4) which are guided in the coupling jaw carrier (2) and which in a locking position engage into openings in the guide rails (17) and lock the coupling jaw carrier (2) in the guide rails (17) to prevent heightwise movenent thereof and which can be withdrawn from the locking position into an unlocking position in which the coupling jaw carrier (2) is displaceable along the guide rails (17), and
a pivotal plate (6) which is mounted in the opupling jaw carrier (2) and which for displacement of the locking bolts (4) between the locking position thereof and the unlocking position thereof is in turn pivotable between a locking position and an unlocking position and is coupled to the locking bolts (4) by way of pins (13) which pass through the pivotal plate parallel to the axis of pivotal movement thereof,
characterised in that
the pivotal plate (6) is arranged substantially in the plane of the locking holts (4) and is engaged by a respective portion with the end which is theretowards of the respective locking bolt (4), and
the pins (13) engage into guide slots (6a) in the pivotal plate (6) and are directly connected to the locking bolts (4).

2. A trailer coupling according to claim 1 characterised in that the pivotal plate (6) engages by a respective portion into an opening (4a) in the respective locking bolt (4).

3. A trailer coupling according to one of the preceding claims characterised in that the pivotal plate (6) is biased into the locking position by a torsion spring (14) which engages the pivotal plate (6) on the one hand and the coupling jaw carrier (2) on the other hand.

4. A trailer coupling according to one of the preceding claims wherein a handle (10) is secured to a projection portion (6b) of the pivotal plate (6), which projects out of the coupling jaw carrier (2), the handle serving for displacement of the coupling jaw carrier (2) in respect of height and for pivotal movement of the pivotal plate (6), characterised in that the handle (10), in the locking position of the pivotal plate (6), is pivotable with respect thereto between a rest position and an operative position and in its rest position, by virtue of a positive connection between the coupling jaw carrier (2) and the pivotal plate (6), prevents movement of the latter out of its locking position.

5. A trailer coupling according to claim 4 characterised in that the loop-like handle (10) is disposed in a substantially horizontal plane in its rest position and in a substantially vertical plane in its operative position.

6. A trailer coupling according to one of the preceding claims characterised in that the pivotal plate (6) is in the form of a cam plate whose outside edge, in the region of the guide slots (6a) thereof, extends substantially parallel thereto and forms safety stops for the locking bolts (4).

7. A trailer ooupling acoording to one of the preceding claims characterised in that the pert (40) of the guide slots (6a) in the pivotal plate (6), in which the pins (13) are disposed in the locking position of the pivotal plate (6) and the locking bolts (4), extends normal to the direction of movement of the locking bolts (4) and that said parts (40) of the guide slots (6a) are disposed on a oommon straight line which passes through the pivot point of the pivotal plate (6).

8. A trailer ooupling according to one of the preceding claims characterised in that the locking bolts (4) and the pivotal plate (6) are fixed on the side remote from the coupling jaw (I) in or to the coupling jaw carrier (2).

9. A trailer coupling acoording to one of the preceding claims characterised in that the coupling jaw carrier (2) has a recess (46) by way of which lubricating grease which is forced into the coupling jaw mounting by way of a lubricating nipple (50) reaches the points of engagement as between the locking bolts (4) and the pivotal plate (6) and in particular passes into the guide slots (6a) thereof.

10. A trailer coupling according to one of the preceding claims characterised in that the openings (17a') in the guide rails (17') are arranged in respective pairs in aligned relationship in the side walls of the guide rails (17') and co-operate with corresponding lateral projections (34) on the locking bolts (4').

**Revendications**

1. Attelage de remorque réglable en hauteur, notamment pour des véhicules agricoles, comprenant
- une chape d'attelage (1),
- un support (2) de la chappe d'attelage, sur lequel la chape d'attelage (1) est fixée et qui est guidé sur des rails de guidage verticaux (17) fixés sur le véhicule,
- des verrous (4), qui sont guidés dans le support (2) de la chape d'attelage (1), s'engagent, dans une position de verrouillage, dans des évidements ménagés dans les rails de guidage (17) et verrouillent le support (2) de la chape d'attelage dans les rails de guidage (17) à l'encontre d'un déplacement en hauteur et peuvent être rétractés hors de la position de verrouillage pour être amenés dans une position de déverrouillage, dans laquelle le support (2) de la chape d'attelage est déplaçable le long des rails de guidage (17), et
- une plaque pivotante (6) montée dans le support (2) de la chape d'attelage et qui peut être pivotée pour sa part entre une position de verrouillage et une position de déverrouillage, pour réaliser le déplacement des verrous (4) entre leur position de verrouillage et leur position de déverrouillage, et est accouplée aux verrous (4) par l'intermédiaire de broches traversant la plaque dans une position parallèle à l'axe de pivotement de cette dernière, caractérisé par le fait
- que la plaque pivotante (6) est disposée approximativement dans le plan des verrous (4) et est en prise, par une partie respective, avec l'extrémité associée du verrou (4), et
- que les broches (13) s'engagent dans des fentes de guidage (6a) de la plaque pivotante (6) et sont reliées directement aux verrous (4).

2. Attelage de remorque suivant la revendication 1, caractérisé par le fait que la plaque pivotante (6) s'engage, par une partie respective, dans un évidement (4a) des verrous (4).

3. Attelage de remorque suivant l'une des revendications précédentes, caractérisé par le fait que la plaque pivotante (6) est précontrainte dans la position de verrouillage par un ressort de torsion (14) accroché d'une part à la plaque pivotante (6) et d'autre part au support (2) de la chape d'attelage.

4. Attelage de remorque suivant l'une des revendications précédentes, dans lequel une poignée (10) est fixée sur un prolongement (6b) de la plaque pivotante (6), qui fait saillie hors du support (2) de la chape d'attelage et sert à régler en hauteur ce support (2) ainsi qu'à faire pivoter la plaque pivotante (6), caractérisé par le fait que lorsque la plaque pivotante (6) est dans sa position de verrouillage, la poignée (10) peut être pivotée par rapport à cette plaque entre une position de repos et une position de service et empêche, dans sa position de repos, un déplacement de la plaque pivotante à partir de sa position de verrouillage, par suite d'une liaison par formes complémentaires entre le support (2) de la chape d'attelage et la plaque pivotante (6).

5. Attelage de remorque suivant la revendication 4, caractérisé par le fait que la poignée en forme d'étrier (10) est située, dans sa position de repos, dans un plan essentiellement horizontal et, dans sa position de service, dans un plan essentiellement vertical.

6. Attelage de remorque suivant l'une des revendications précédentes, caractérisé par le fait que la plaque pivotante (6) est réalisée sous la forme d'un disque à came dont le bord extérieur est, dans la zone des fentes de guidage (6a) du disque à came, essentiellement parallèle à ces fentes et forme des butées de sécurité pour les verrous (4).

7. Attelage de remorque suivant l'une des revendications précédentes, caractérisé par le fait que la partie (40) des fentes de guidage (6a) de la plaque pivotante (6), dans laquelle les broches (13) sont situées lorsque la plaque pivotante (6) et les verrous (4) sont dans la position de verrouillage, est perpendiculaire à la direction de déplacement des verrous (4) et que ces parties (40) des fentes de guidage (6a) sont situées sur une droite commune passant par le centre de rotation de la plaque pivotante (6).

8. Attelage de remorque suivant l'une des revendications précédentes, caractérisé par le fait que les verrous (4) et la plaque pivotante (6) sont fixés sur la face, tournée à l'opposé de la chape d'attelage (1), dans ou sur le support (2) de cette chape d'attelage.

9. Attelage de remorque suivant l'une des revendications précédentes, caractérisé par le fait que le support (2) de la chape d'attelage comporte un évidement (46), au moyen duquel de la graisse insérée par l'intermédiaire d'un raccord à graisse (50) monté dans le support de la chape d'attelage, parvient aux emplacements en prise entre les verrous (4) et la plaque pivotante (6) et notamment dans les fentes de guidage (6a) de cette dernière.

10. Attelage de remorque suivant l'une des revendications précédentes caractérisé par le fait que les évidements (17a') des rails de guidage (17') sont réalisés de manière à être alignés respectivement par couples dans les parois latérales des rails de guidage (17') et coopèrent avec des appendices saillants latéraux correspondants (34) des verrous (4').

# FIG. 1

# FIG. 2

# FIG. 3

# F.I.G. 4

0 155 338

# FIG. 5

0 155 338

# FIG.6

0 155 338

# FIG. 7

17'    17a'    17'

(a)    4'    2'

(d)    Schnitt A-A

2a
30
4'
34
34
17a'
35
35
30
17a'

(b)    34    17'
4'    2a
34

(c)    34    17'
4'    2a
34